(19) **Europäisches Patentamt**

**European Patent Office**

**Office européen des brevets**

(11) Publication number: **0 272 340 B1**

## (12) EUROPEAN PATENT SPECIFICATION

(45) Date of publication of patent specification: **24.07.91**  (51) Int. Cl.⁵: **B65G 1/133**

(21) Application number: **86117980.2**

(22) Date of filing: **23.12.86**

(54) **Multi-access storage system.**

(43) Date of publication of application:
**29.06.88 Bulletin 88/26**

(45) Publication of the grant of the patent:
**24.07.91 Bulletin 91/30**

(84) Designated Contracting States:
**BE CH DE ES FR GB IT LI NL SE**

(56) References cited:
**FR-A- 2 064 000**
**US-A- 4 422 554**

(73) Proprietor: **COMPUTER AIDED SYSTEMS, INC.**
**1220 Brickyard Cove Road**
**Point Richmond, CA 94801(US)**

(72) Inventor: **Lichti, Robert**
**9951 Bell Ranch Drive**
**Santa Fe California 90670(US)**

(74) Representative: **Madgwick, Paul Roland et al**
**Ladas & Parry Isartorplatz 5**
**W-8000 München 2(DE)**

Rank Xerox (UK) Business Services

## Description

In order to meet a progressively increasing need for the storage of hundreds, and in some instances, thousands, of individual articles in a manner suitable for retrieval of any of them by automatic means, there has been an attempt to provide motorized storage racks. The object of motorized racks has been to provide the capability of delivering individual storage containers to an unloading and loading station in response to a computerized call system. Motorized racks of the kind made reference to currently available and corresponding to the pre-characterising part of claim 1 are exemplified by U.S. Patent No. 4,422,554.

Although such motorized racks have been a notable advance in identifying and accelerating the delivery of assorted parts from storage, some limitations have been experienced, chief among which has been the need for stopping the rack while a container is being unloaded and continued holding of the rack is stopped position for reloading. The time involved in a procedure of this kind is appreciably exaggerated under circumstances where unloading and loading has to take place at the same location.

Another circumstance adding to the problem is the need to have a constant record kept of the location of containers reloaded on the motorized rack so that they can again be identified accurately when needed. The objectionable time delay becomes exaggerated to a material degree when a multiple number of such motorized racks are stacked one above the other in the interest of taking full advantage of storage space available.

When it is borne in mind that on some occasions containers can be relatively small for the storage of numerous inventory items of especially small dimensions, while on other occasions large containers may be needed to store an adequate number of relatively larger inventory items, the time interval during which the motorized rack must be stopped for unloading and loading can become critical.

Therefore, there is a need for a multi-access storage system wherein the unloading of containers from the motorized storage conveyor, and subsequent reloading, can take place while the motorized rack continues traveling.

The above mentioned problems are solved by a system according to claim 1.

IN THE DRAWINGS:

FIG. 1 is a plan view of a multiple motorized storage rack installation illustrating one location at which unloading and loading assemblies may be installed.

FIG. 2 is a fragmentary elevational view, partially in section, on the line 2-2 of FIG. 4.

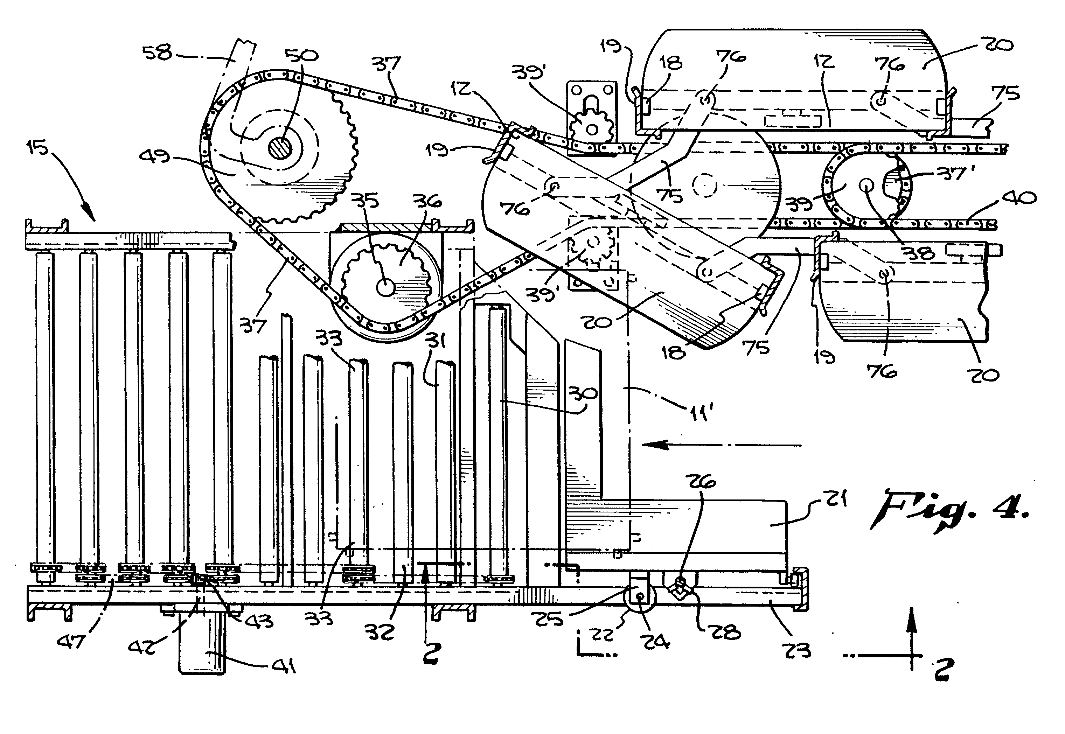

FIG. 3 is a fragmentary cross-sectional view on the line 3-3 of FIG. 2.

FIG. 4 is a plan view of the unloading assembly and applicable portion of the motorized rack.

FIG. 5 is a plan view of a part of the loading assembly and applicable portion of the motorized rack.

FIG. 6 is a cross-sectional view of a clutch on the line 6-6 of FIG. 11.

FIG. 7 is a side elevational view of the clutch device.

FIG. 8 is a cross-sectional view on the line 8-8 of FIG. 7.

FIG. 9 is a view similar to FIG. 6 showing the clutch device in a different attitude of operation.

FIG. 10 is a fragmentary plan view, similar to FIG. 5, but showing a successive step in the loading operation.

FIG. 11 is a cross-sectional view on the line 11-11 of FIG. 10.

FIG. 12 is a fragmentary plan view of portions of the unloading and loading assemblies with the loading assembly in still a further advanced stage of operation.

FIG. 13 is a fragmentary plan view similar to FIG. 12, but showing a still further advance in the operation.

FIG. 14 is a fragmentary cross-sectional view on the line 14-14 of FIG. 13.

FIG. 15 is a fragmentary vertical sectional view on the line 15-15 of FIG. 14.

## DETAILED DESCRIPTION

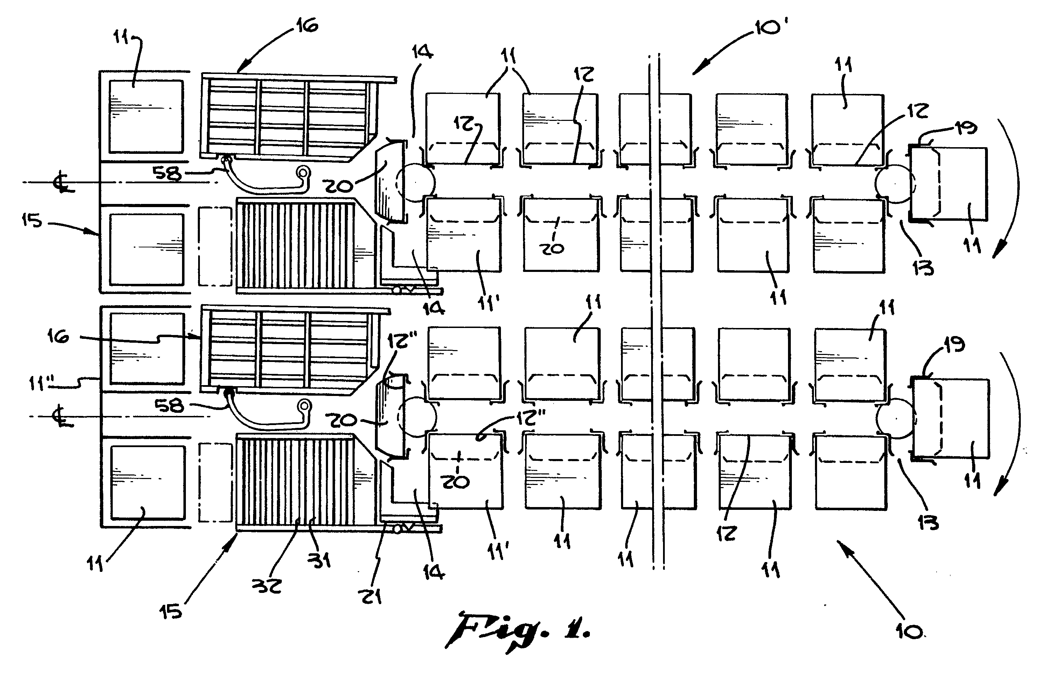

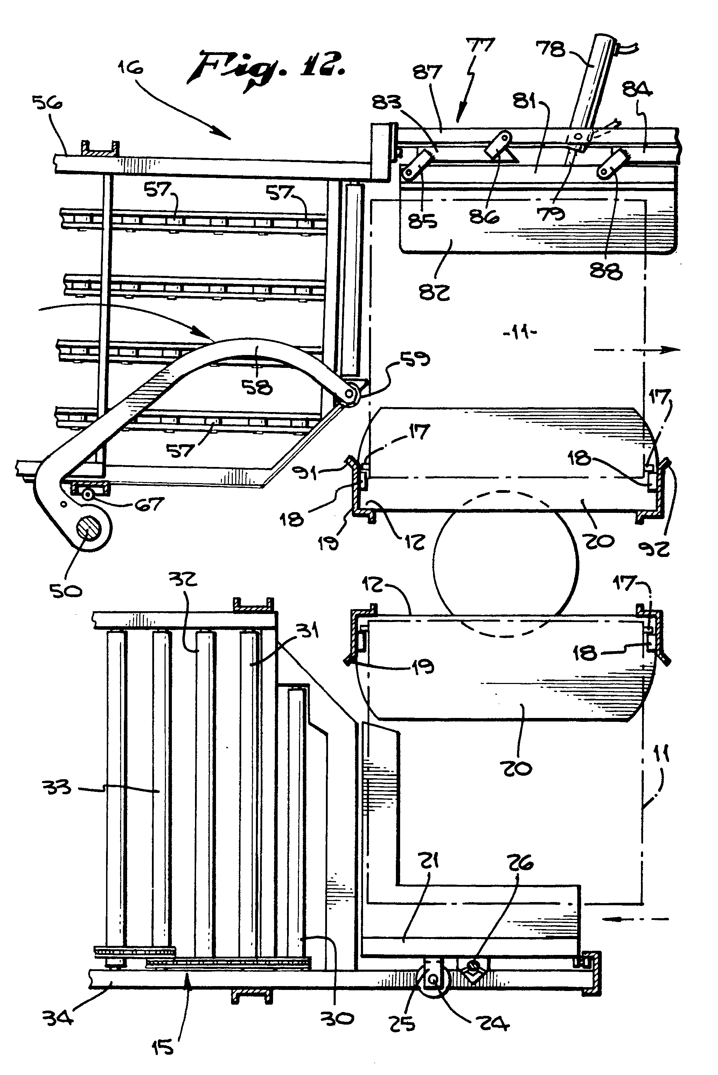

In an embodiment of the invention chosen for the purpose of illustration there is shown in FIG. 1 two endless conveyor racks 10 and 10′ in parallel relationship on each of which is a multiple number of containers 11, each mounted at its container station 12. The container stations travel in parallel legs between opposite ends 13 and 14. In the embodiment chosen, there is at each end 14 an unloading assembly 15 and a loading assembly 16. It will be appreciated that, space permitting, there can be virtually any number of conveyor racks in such side by side relationship and also that racks can be arranged in tiers, one above the other, as suggested in FIG. 11. Further, in the chosen embodiment, it may be assumed that the endless conveyor racks 10, 10′, etc., are traveling in a clockwise direction and may be so motorized as to be capable of continuous travel at every level. Although, as illustrated, there is a container 11 at every station 12, except the left end station, the conveyor rack is operable in the same fashion, although additional stations might, on occasions, be empty.

THE UNLOADING ASSEMBLY

For the purpose of illustration, it may be assumed that a container 11' of the endless conveyor rack 10, at the left end station 12' of the lower leg is approaching an unloading operation to be performed by the adjacent unloading assembly 15.

A loading operation can be presumed to be imminent by which a container 11" will be moved into position to be ultimately loaded on an empty station 12".

To understand the unloading operation, it should be appreciated that the container 11' is in a sense hung on the conveyor rack 10 by use of bracket means in the form of pegs 17, rigidly mounted on side walls of the container 11' which are received by complementary bracket means in the form of flanges 18, anchored to columns 19 of the conveyor. Shelves 20 at the respective stations 12 are for guidance only and not for support of the containers. Although the containers are shown hung on the rack, shelf support for the containers would be an acceptable alternative.

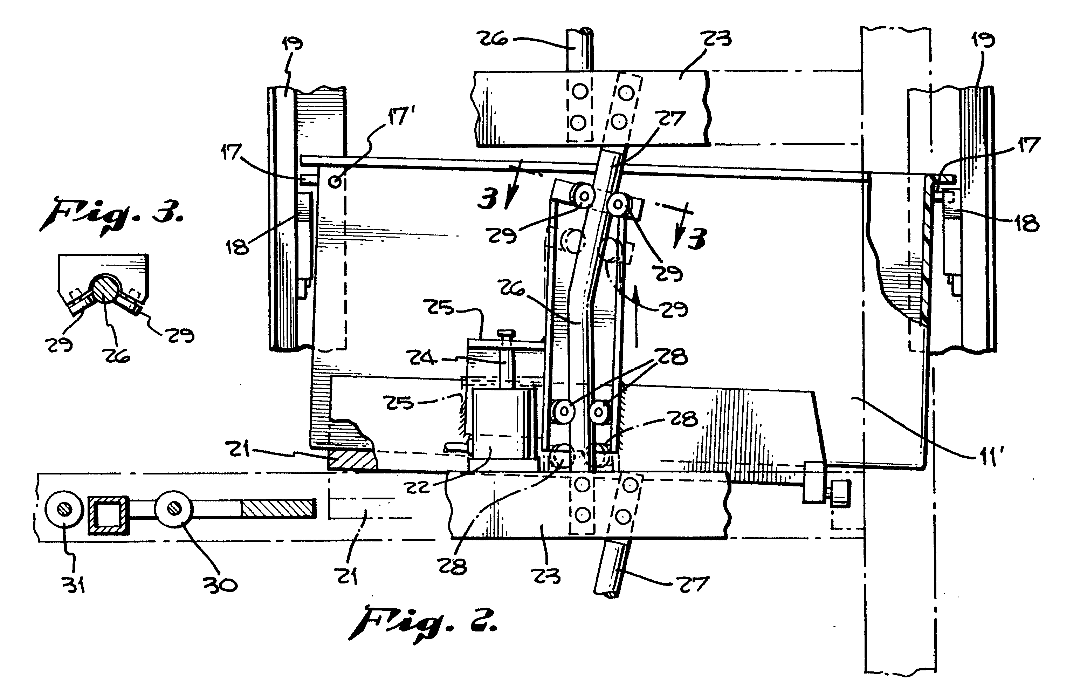

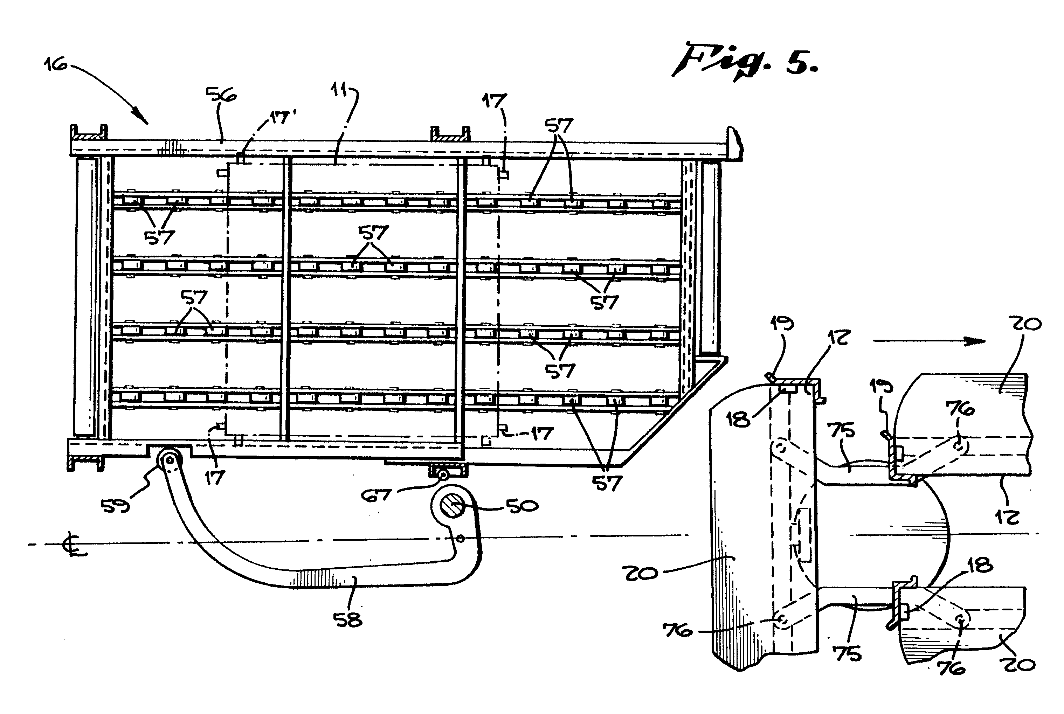

When the container 11' reaches the endmost position, it will ride over an elevating platform 21, as shown in FIG. 2 and in plan view in FIG. 4. For lifting the elevating platform 21 so as to disengage the container from the conveyor, a lifting cylinder 22 mounted on an adjacent beam 23 is provided with a piston 24 acting against a bracket 25 of the elevating platform, action of which results in lifting the left edge of the container 11' high enough for the peg 17 on that side to clear the corresponding flange 18. Although essentially a clockwise tilting motion is provided, there will be a degree of lift for the right-hand wall of the container 11', sufficient to loosen engagement of the corresponding peg 17 from its flange 18.

To accentuate the tilt, there may be provided a substantially vertically extending shaft 26 mounted on the beam 23, having a bent portion 27 at its upper end. A lower set of casters 28 are adapted to ride upwardly on a vertical portion of the shaft 26 while an upper set of casters 29 ride along the bent portion 27. The net result of the casters rolling upwardly on the shaft 26 is to lift the left-hand peg 17, clear of the corresponding flange 18, sufficient to disengage the container 11' from its corresponding station 12' so that the container can be moved clear of the conveyor rack and advance to the broken line position of FIG. 4. It should be appreciated that it is unnecessary to lift the right-hand peg 17 clear of its corresponding flange 18 because the corresponding shelf 20 will be continuing its motion in a clockwise direction while the lifting is taking place, the result of which is having the wall of the shelf 20 push the container in a direction from right to left to FIG. 4 far enough so that upon automatic lowering of the elevating platform 21, the right-most power actuated horizontal roller 30 will be engaged by the bottom of the container 11' and progressively moved in a direction from right to left, with the help of additional power actuated horizontal rollers 31, 32, 33, etc., acting as a conveyor for the unloading assembly 15. The same discharge disposition of the container would apply under circumstances where, in the alternative, both rear corners were released simultaneously instead of by the tilting expedient.

Synchronization between the travel of the endless conveyor rack 10, the unloading assembly 15 and the loading assembly 16, is accomplished, in the embodiment chosen, by means of a mechanical drive interconnecting the various moving parts, as illustrated advantageously in FIG. 4. A common drive shaft 35, emanating from a conventional source of power, has mounted thereon a sprocket 36 from which a chain 37 extends to engagement with a sprocket 37' mounted on a shaft 38 of the endless conveyor rack. A second sprocket 39 has a chain 40 in engagement with it, the chain 40 being a portion of the endless drive for the conveyor rack 10. One or more tension sprockets 39' may be employed to set the tension of the chain 37.

A separate motor 41 mounted on the beam 23 is provided with shaft 42 which drives a sprocket 43 which in turn motivates a chain drive assembly 47 for the rollers 30, 31, 32, 33, etc., which in this fashion comprise a conveyor for the containers 11 as they are fed to it by the unloading assembly. Moreover, by an appropriate selection of sprocket sizes and chain drive assembly 47, the rollers 30, 31, 32, 33, etc., can be made to rotate rapidly enough to move the container 11' along the disposal conveyor at a speed more rapid than the speed of approach of comparable containers while being carried by the approaching leg of the endless conveyor rack. Accordingly, the containers can be moved out of the way for disposition at a rate faster than they are unloaded from the conveyor rack. Although a single common drive shaft 35 has been shown in the chosen embodiment for operating all levels of the conveyor rack, there could, where preferred, be a separate motor for each level.

The same common drive shaft 35, by use of the chain 37 in engagement with a sprocket 49 on a shaft 50, can be used for driving appropriate parts of the loading assembly 16.

THE LOADING ASSEMBLY

If desired, loading of containers on stations of the conveyor rack can proceed while unloading is taking place as well as before or after that operation. For loading, the containers 11, shown in phantom in FIGS. 5, 10 and 11, for example, may be advanced along an approach conveyor 56 with the assistance of a set of idler rollers 57. Since the unloading and loading structure and operation are independent of each other, they could be at opposite ends, or at both ends, or even at the sides under acceptable circumstances.

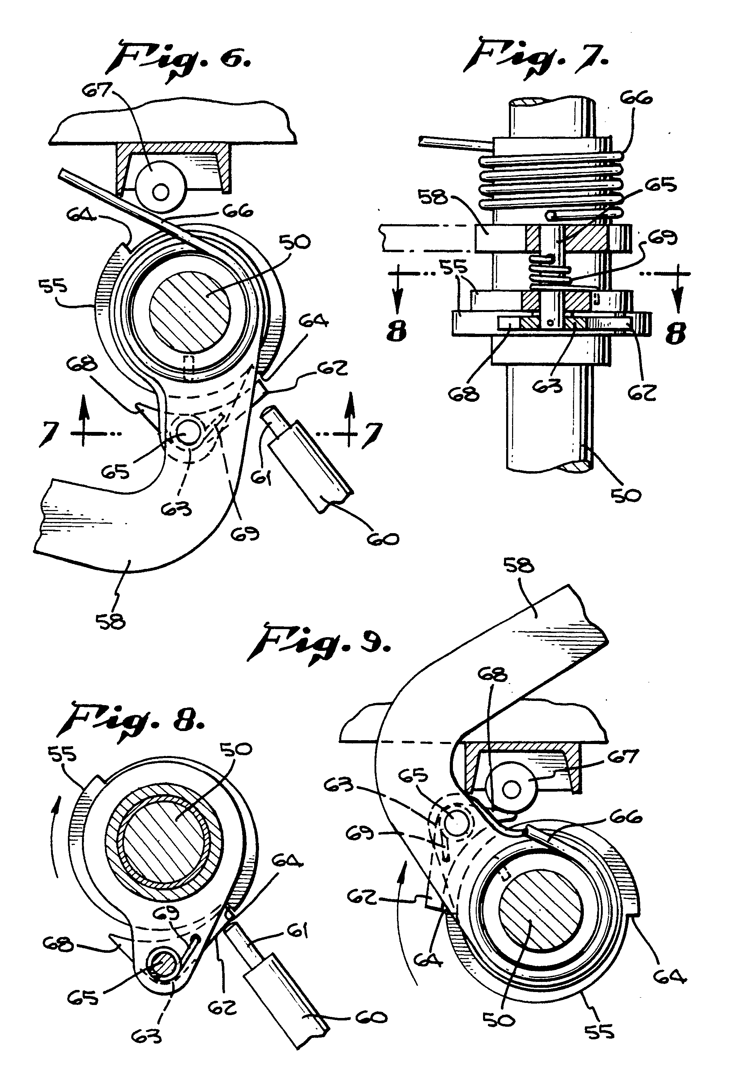

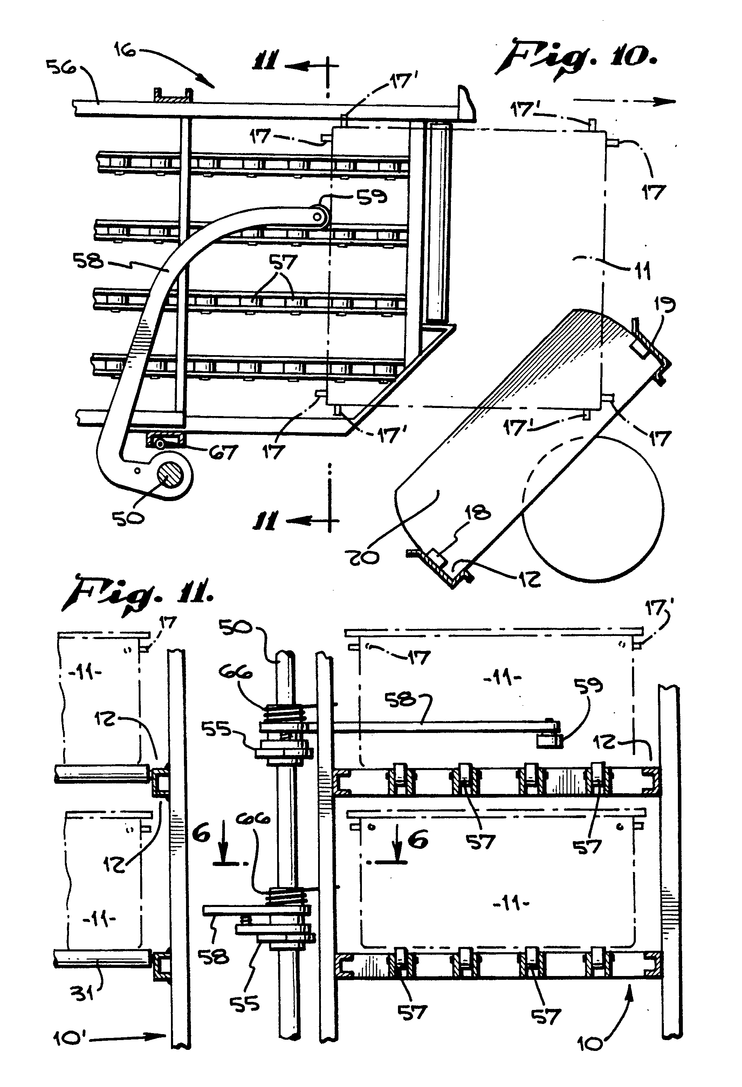

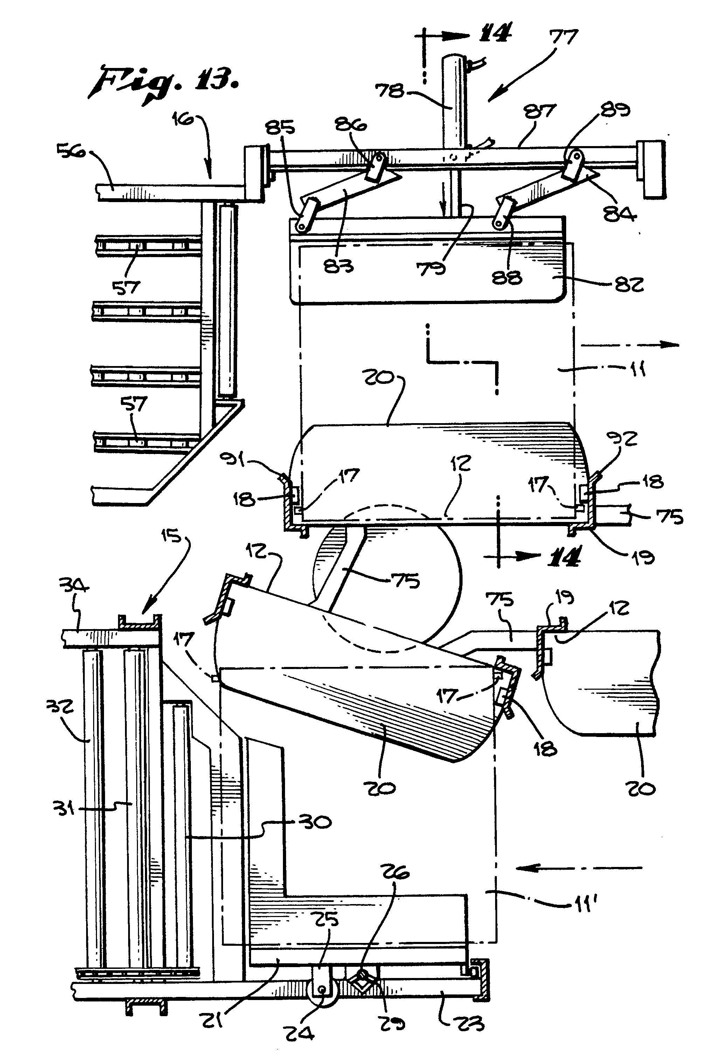

To be certain that each container in turn reaches loading position with respect to the conveyor rack at a proper time, there is provided an impeller arm 58 in response to rotation of the shaft 50. In order to have the impeller arm act at a proper time interval, there is provided an intermittently actuated clutch 55, the details of which are shown in FIGS. 6, 7, 8 and 9. Containers 11 are placed upon an approach conveyor 56 where, riding on idler rollers 57, the container passes within reach of the impeller arm 58 mounted on the shaft 50. By properly timing manipulation of the clutch 55, the impeller arm 58 rotates in a clockwise direction, as viewed in FIGS. 5, 10 and 12, to advance the container 11 under power to the loading position of FIG. 12. During this movement, a caster 59 at the free end of the impeller arm 58 moves to a position of engagement with the trailing wall of the container 11, as shown in FIG. 10, ultimately moving the container to the loading position of FIG. 12.

As an alternative expedient, by way of example, a belt type conveyor could be used instead of the idler rollers 57 to move the container into the proper position.

The shaft 50, as previously described, is gear timed in synchronized rotation with respect to travel of the conveyor rack 10 by means of rotation of the shaft 38. As can be observed in FIG. 4, rotation of the shaft 50 may be made at a rate slower than the rate of travel of container stations on the conveyor rack. Once the impeller arm 58 is set in motion by action of the clutch, it will advance the container at the desired speed to synchronize its arrival at the loading station of FIG. 12 with arrival of the empty station, exemplified by the shelf 20.

To actuate the clutch, there is provided, as shown in FIGS. 6 and 8, a solenoid 60, a plunger 61 of which is projected into engagement with one arm 62 of a dog 63 so as to move the arm 62 from the clear position of FIG. 6 to engaged position of FIG. 8 with a cam 64. In that the dog 63 has its stub shaft 65 in engagement with the impeller arm 58, the cam 64, being non-rotatably anchored to the continuously rotating shaft 50, causes the impeller arm to be moved in a clockwise direction, as heretofore described. Motion of the impeller arm 58 acts to build up energy in a torsion return spring 66.

At the end of angular movement of the impeller shaft 58, as shown in FIG. 12, a camming roller 67, shown in FIGS. 6 and 9, acting on an arm 68 at the opposite end of the dog 63, serves to disengage the arm 62 from the cam 64. Released as described, the return spring 66 acts to return the impeller arm 58 from the extended position of FIG. 12 to the initial position of FIG. 5. Once the dog has been returned to disengaged position by action of the camming roller 67, a second smaller torsion spring 69 serves to hold the arm 62 out of engagement with the cam 64 until it is again depressed by action of the solenoid 60.

The synchronization between the conveyor rack 10 and the loading assembly 16, together with the unloading assembly 15, is assured, in the chosen embodiment, by the endless chain structure which joins the sundry container stations of the conveyor rack exemplified by the shelves 20. As can be observed in FIGS. 4 and 13, for example, links 75 are pivotally connected to adjacent shelves 20 on opposite ends by pins 76. As a result, there will always be a station on the conveyor at the end of the loading side opposite a comparable station at the end of the unloading side, separated by a station facing endwardly toward the unloading and loading assemblies. The correct positioning can be assured by the synchronized timing heretofore made reference to.

Once the container 11 has reached the loading position, as shown in FIGS. 12, 13 and 14, a transversely acting mechanism 77 forming part of the loading assembly 16 is called upon to place the container in position on the appropriate station 12 of the endless conveyor rack 10.

As the container, after traveling along the approach conveyor 56, reaches approximately the phantom position of FIG. 10, the empty station, exemplified by the shelf 20, will have reached approximately the position shown in FIG. 10. In this position, the inside corner of the leading edge of the container will commence to closely approach the empty station 12, exemplified by the shelf. As the container continues to be pushed into the loading position by action of the impeller arm 58, the shelf 20 will continue turning until it reaches the position of FIG. 12. At the same time, the container 11 will have been pushed into the position shown in phantom by pressure of the caster 59 of the impeller arm 58, but the peg 17 at the inside corners of the container will not have as yet engaged with the flanges 18 of the conveyor rack. Engagement is accomplished by action of the transversely acting mechanism 77.

## THE TRANSVERSELY ACTING MECHANISM

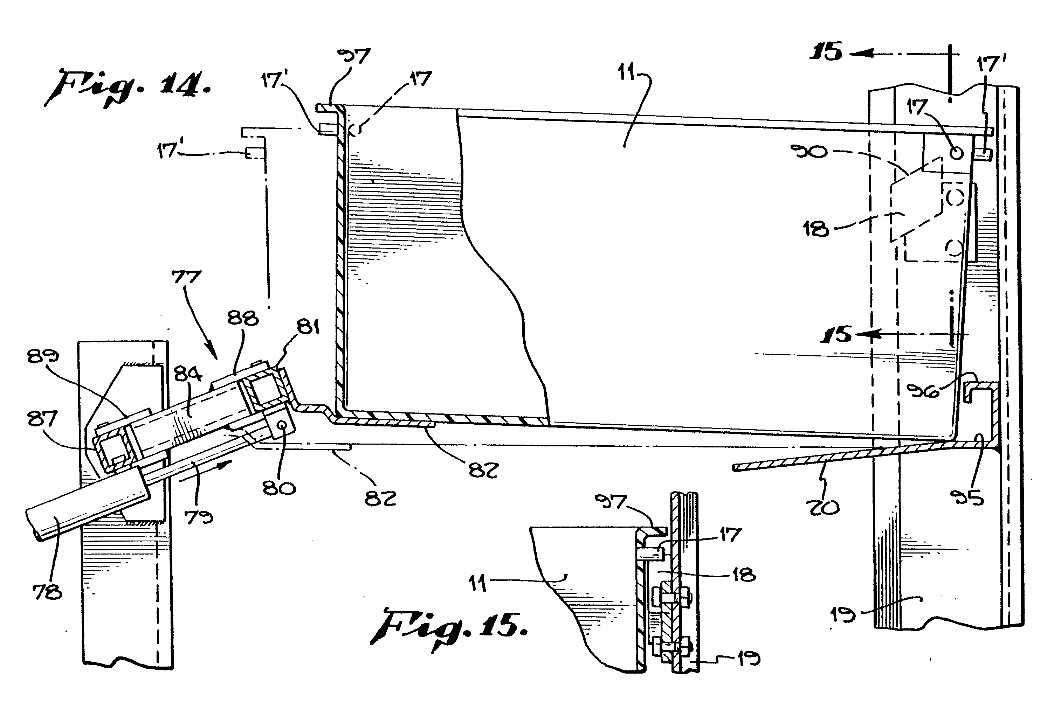

Essential portions of the mechanism 77, shown in plan view in FIGS. 12 and 13 and in substantially a sectional view in FIG. 14, are embodied in a power cylinder 78 pivotally mounted on a horizontal beam member 87, a plunger 79 of which is secured to a bracket 80 attached to a loading bar 81. The loading bar is provided with a loading tray 82 adapted to slide under the outside of the container 11 to make certain that it can be lifted to the proper position for ultimate loading at the selected station. To provide for accurate movement of the loading tray 82, there are provided two linkages, on respectively opposite sides of the power cylinder 78. On the left side, a central link 83 is attached by a short link 85 to the loading bar 81 and by another short link 86 to a stationary horizontal beam member 87. Similarly, on the right side, as viewed in FIG. 12, a central link 84 is attached by means of a short link 88 to the loading bar 81 and by a second short link 89 to the horizontal beam member 87. The parallelogram effect of the two sets of links maintains the loading bar 81 and loading tray 82 in a proper position of alignment as the loading bar and loading tray are pushed from the position of FIG. 12 to the position of FIGS. 13 and 14. Further, by reason of tilting the transversely acting mechanism 77 obliquely upwardly, as shown in FIG. 14, the outside edge of the container 11 is lifted from the broken line position of the loading tray 82 to the solid line position of the same tray 82, thus providing an upward tilt for the outside edge of container 11.

As the outside edge is being lifted in the manner shown, the container at the same time is being moved in a direction from left to right, as viewed in FIG. 14, from the broken line position to the solid line position. Movement as described causes the pegs 17 to first engage a camming slope 90 of the respective flange 18 so that the pegs will ride over the camming slope and lodge behind the flange 18 in each case in the manner shown in FIG. 14. Once behind the flange, the container can drop to a position of engagement with a ledge 95 where it is positioned by a stop 96.

By the procedure just described, the container 11 is hung in proper position on the empty station 12 of the conveyor rack which has been provided for it. The loading tray 82 is then withdrawn by reverse action of the power cylinder 78 so as to be receptive of the next container 11 which becomes moved to loading position for a succeeding empty station.

In the chosen embodiment of the invention pegs 17 and flanges 18 have been relied upon as a simple effective expedient for attaching the container to the rack at the proper location. It should be appreciated that what is important to the invention is to have the attachment a releasable attachment, irrespective of the expedient chosen. Various alternatives may be preferred as, for example, making use of a spring actuated flange, or instead a spring activated peg. Another alternative is one in which a movable hook may be employed on the rack to releasably engage an appropriate hole in a rim 97 of the container, or other comparable structure on the container.

It should be borne in mind in connnection with the operation for loading just described that the shelf 20 is continuously moving, first around the end of the conveyor rack to the loading position, and thereafter immediately in a direction from left to right along the corresponding leg of the rack. The container arrives at the loading position in advance of arrival of the empty station by a sufficiently brief time span to make certain that there is proper alignment when the power cylinder 78 is triggered to push the container into the station and engage the pegs 17 with the flanges 18. It should be appreciated in this context that when the container arrives at the loading position, the inside edge of the container is only a short distance from the conveyor rack so that the distance can be immediately closed and engagement accomplished in a very brief span of time.

As an additional assurance that the entry will be timely, there may be provided tapered edge sections 91 and 92 at the ends of the shelf 20 for guidance.

Although reference has been made to the containers 11 in a manner directing attention to the inside edge of the container as being provided with pegs 17, it should be noted that comparable pegs 17 are also provided at outside ends of the side walls and pegs 17′ at opposite ends of both the front wall and back wall of the container. Having the container equipped in this fashion with multiple sets of pegs 17, a square container can be loaded on and carried by appropriate stations 12 of the conveyor rack in any one of four orientations, since all pegs 17 and also the pegs 17′ will engage with the flanges 18 in the same fashion. The pegs as shown are located beneath the rim 97 which extends around the top of the container.

## Claims

1. A multi-access storage system comprising an endless conveyor (10) having a multiple number of stations (12) and material retention members (11) for occupying stored positions at said stations (12);
**characterized in that**
there are at least two transfer sites (15, 16) adjacent the conveyor for transfer of said retention members (11) between positions on and off the conveyor (10), said stations (12) having a path of travel to and from said transfer sites, conveyor attachment elements (18) at said stations on the conveyer; retention member attachment elements (17) on the retention members (11); a transfer assembly at said transfer sites for shifting retention members (11) between engaged and disengaged conditions of said attachment elements (17, 18) while said endless conveyor (10) continues in motion about an endless loop along said path of travel past said transfer sites; and a motion coordinating assembly (37) having elements thereof in operating engagement with both the conveyor (10, 30) and the transfer assembly (16, 50) whereby the rate of operation of the conveyor and the rate of operation of the transfer assembly (16, 50) are in coordination throughout variations in said rate.

2. A multi-access storage system as in Claim 1 wherein there are two transfer sites, one of said sites being an extraction site (15) for extraction of retention members from the conveyor and the other of said sites being an insertion site (16) for insertion of retention members onto the conveyor.

3. A multi-access storage system as in Claim 2 wherein said motion coordinating assembly (37) has elements thereof in operating engagement with both the conveyor (38) and the transfer assembly at said insertion site (16) whereby to coordinate the rate of travel of the stations (12) past said insertion site (16) with the rate of travel of the retention member (11) to said insertion site (16).

4. A multi-access storage system as in Claim 1 wherein there is an activating assembly (19, 21) responsive to conveyor travel interemediate the conveyor and the transfer assembly at the transfer site (15) for effecting a change in condition of said attachment elements (17, 18).

5. A multi-access storage system as in Claim 1 wherein there is a drive (19) interemediate the conveyor (10) and the retention member (11) operative at the transfer site (15) to effect movement of said retention members (11) away from said coveyor (10) upon disengagement of said attachment elements (17, 18).

6. A multi-access storage system as in Claim 1 wherein one of said transfer sites is an extraction site and there is an extraction assembly (15) comprising a diverting medium (21) at said extraction site having a first adjustment clear of said retention members (11) and a second adjustment wherein the diverting medium (21) is in potential engagement with said retention members during travel of said retention members on said conveyor and wherein said diverting medium (21) is adapted in response to continued travel of said conveyor to effect disengagement of said respective retention member (11) from the conveyor.

7. A multi-access storage system as in Claim 6 wherein said diverting medium (21) includes a selectively acting power assembly (22) for changing the adjustment of said diverting medium between said first and second adjustments.

8. A multi-access storage system as in Claim 6 wherein there is a drive (19) intermediate the conveyor and the retention member (11) operative at the extraction site (15) to effect movement of retention members to a position clear of said conveyor.

9. A multi-access storage system as in Claim 6 wherein said diverting medium (21) comprises a contact member having a lower first position of adjustment in the path of travel of said stations (12) clear of engagement with said retention members (11) and a higher second position in lifting engagement with the retention members (11) in operative adjustment whereby to lift the retention member attachment elements (17) out of engagement with the corresponding conveyor attachment elements. (18).

10. A multi-access storage system as in Claim 9 wherein there is a power actuated lifting structure (22) on the conveyor in lifting engagement with said contact member (21) for changing the vertical position of said retention member (11).

11. A multi-access storage system as in Claim 9 wherein there is a power actuated lifting structure (22) on the conveyor (10) having a progressive lifting engagement with said contact member (21) productive of a lifting of the leading side of the retention member (11) in advance of the trailing side whereby the attachment elements (17, 18) on the leading side are disengaged in advance of the attachment elements (17, 18) on the trailing side.

12. A multi-access storage system as in Claim 1 wherein one of said transfer sites is an insertion site (16) and there is an insertion assembly comprising an approach (56, 57) for directing retention members to the conveyor and placement elements (77) for advancing the retention members (11) to an insertion location relative to an empty station at the insertion site and for moving the retention members (11) to a position wherein said retention member attachment elements (17) engage the complementary conveyor attachment elements (18) at said empty station on the conveyor.

13. A multi-access storage system as in Claim 12 wherein said insertion assembly includes low friction elements (57) on an approach and guide structure (82) transversely disposed relative to said approach (56) at an insertion position and a motorized actuating drive (78) acting between said insertion assembly and the conveyor (10) when the respective empty station is passing said insertion site whereby to load the corresponding retention member (11) on the corresponding station (12) of the conveyor.

14. A multi-access storage system as in Claim 12 wherein said insertion assembly includes a power actuated impeller (58) for moving the retention elements (11) along the approach (56), a drive (37) interconnecting said conveyor (10) and said impeller (58) and a clutch (55) in operative association with said drive (37) and said impeller (58) whereby to selectively actuate the impeller when there is an empty station at the adjacent portion of said conveyor.

15. A multi-access storage system as in Claim 1 wherein one of said sites is an extraction site (15) for extraction of material transfer members (11) from the conveyor and the other of said sites is an insertion site (16) for insertion of material transfer members onto the conveyor, an extraction assembly comprising a diverting medium (21) at said extraction site having a first adjustment (broken lines) clear of said retention members and a second adjustment (solid line) wherein the diverting medium (21) is in potential engagement with the retention members (11) during travel of the retention members on a conveyor and wherein said diverting medium (21) is adapted in response to continued travel of the conveyor to effect disengagement of the respective retention member from the conveyor, an insertion assembly at the insertion site (16) comprising an approach (56) for directing restention members to an insertion location relative to an empty station at the insertion site and for moving retention members to a position wherein said retention member attachment elements (17) engage complementary conveyor attachment elements (18) at a corresponding empty station, and a common interconnecting structure (37) between the conveyor, the extraction assembly and the insertion assembly whereby the rates of operation of the extraction assembly and the insertion assembly are responsive to the rate of operation of the conveyor throughout variations in the rate of operation of the conveyor.

## Revendications

1. Système de stockage à accès multiples comprenant un convoyeur sans fin (10) qui comporte un nombre multiple de stations (12) et des éléments de rétention ou conteneurs d'articles (11) pour occuper des positions de stockage auxdites stations (12) ;
   caractérisé en ce que
   il y a au moins deux sites de transfert (15, 16) adjacents au convoyeur pour le transfert desdits conteneurs (11) entre une position sur le convoyeur (10) et une position en dehors de celui-ci, lesdites stations (12) ayant une trajectoire d'approche et d'éloignement desdits sites de transfert ; des éléments de fixation côté convoyeur (18) prévus auxdites stations sur le convoyeur ; des éléments de fixation côté conteneur (17) prévus sur les conteneurs (11) ; un dispositif de transfert prévu auxdits sites de transfert pour déplacer les conteneurs (11) entre des positions d'enclenchement et de libération des dits éléments de fixation (17,18) pendant que ledit convoyeur sans fin (10) continue à se déplacer sur une boucle sans fin le long de ladite trajectoire passant près des sites de transfert ; et un dispositif de coordination de mouvement (37) dont les éléments sont en prise active à la fois avec le convoyeur (10,30) et avec le dispositif de transfert (16,50) de sorte que la vitesse de fonctionnement du convoyeur et la vitesse de fonctionnement du dispositif de transfert (16, 50) sont coordonnées indépendamment des variations de la dite vitesse.

2. Système de stockage à accès multiples suivant la revendication 1, dans lequel il y a deux sites de transfert, un de ces sites étant un site d'extraction (15), pour extraire les conteneurs du convoyeur, et l'autre de ces sites étant un site d'insertion (16) pour l'insertion de conteneurs sur le convoyeur.

3. Système de stockage à accès multiples suivant la revendication 2, dans lequel ledit dispositif de coordination de mouvement (37) comporte des éléemnts en prise active à la fois avec le convoyeur (38) et avec le dispositif de transfert audit site d'insertion (16), de façon à coordonner la vitesse de déplacement des stations (12) devant ledit site d'insertion (16) avec la vitesse de déplacement du conteneur (11) amené audit site d'insertion (16).

4. Système de stockage à accès multiples suivant la revendication 1,dans lequel il y a un dispositif de manoeuvre (19,21) qui répond au déplacement du convoyeur, entre le convoyeur et le dispositif de transfert au site de transfert (15), pour effectuer un changement de position des dits éléments de fixation (17,18).

5. Système de stockage à accès multiples suivant la revendication 1, dans lequel il est prévu un entraînement (19),entre le convoyeur (10) et le conteneur (11), qui agit au site de transfert (15) pour effectuer un mouvement d'éloignement desdits conteneurs (11) par rapport audit convoyeur (10) lors de la libération des dits éléments de fixation (17,18).

6. Système de stockage à accès multiples suivant la revendication 1, dans lequel un desdits sites de transfert est un site d'extraction et il est prévu un dispositif d'extraction (15) comprenant un élément de déviation (21) audit site d'extraction, avec un premier réglage dégagé desdits conteneurs (11) et un deuxième réglage dans lequel l'élément de déviation (21) est en contact potentiel avec lesdits conteneurs pendant le déplacement desdits conteneurs sur ledit convoyeur, et dans lequel ledit élément de déviation (21) est capable, en réponse à la poursuite du mouvement dudit convoyeur, de dégager ledit conteneur (11) du convoyeur.

7. Système de stockage à accès multiples suivant la revendication 6, dans lequel ledit élément de déviation (21) comporte un dispositif de manoeuvre agissant sélectivement pour changer la position dudit élément de déviation, entre les premier et deuxième réglages.

8. Système de stockage à accès multiples suivant la revendication 6, dans lequel un élément d'entraînement (19) est prévu entre le convoyeur et le conteneur (11) et il agit au site d'extraction (15) pour effectuer un mouvement des conteneurs à une position dégagée dudit convoyeur.

9. Système de stockage à accès multiples suivant la revendication 6, dans lequel ledit élément de déviation (21) comprend une partie de contact ayant une première position inférieure de réglage dans la trajectoire desdites stations (12), sans contact avec lesdits conteneurs (11), et une deuxième position plus haute, en contact de soulèvement avec les conteneurs (11) en réglage actif, de façon à soulever les éléments de fixation (17) des conteneurs et à les dégager des éléments de fixation correspondante (18) du convoyeur.

10. Système de stockage à accès multiples suivant la revendication 9, dans lequel une structure de soulèvement motorisée (22) est prévue sur le convoyeur, en contact de soulèvement avec ledit élément de contact (21) afin de changer la position verticale dudit conteneur (11).

11. Système de stockage à accès multiples suivant la revendication 9, dans lequel une structure de soulèvement motorisée (22) est prévue sur le convoyeur (10) pour soulever progressivement ledit élément de contact (21) et engendrer un soulèvement du côté avant du conteneur (11) en avance par rapport au côté arrière, de sorte que les éléments de fixation (17,18) situés sur le côté avant sont dégagés avant les éléments de fixation (17,18) situés du côté arrière.

12. Système de stockage à accès multiples suivant la revendication 1, dans lequel un desdits sites de transfert est un site d'insertion (16) et il est prévu un dispositif d'insertion comprenant des moyens d'approche (56,57),pour diriger des conteneurs vers le convoyeur, et des éléments de placement (77) pour faire avancer les conteneurs (11) à une position d'insertion par rapport à une station vide se trouvant au site d'insertion et pour amener les conteneurs (11) à une position telle que lesdits éléments de fixation (17) des conteneurs viennent en prise avec les éléments de fixation complémentaires (18) du convoyeur à ladite station vide sur le convoyeur.

13. Système de stockage à accès multiples suivant la revendication 12, dans lequel ledit dispositif d'insertion comprend des éléments à faible frottement (57) sur des moyens d'approche et une structure de guidage (82) disposée transversalement par rapport auxdits moyens d'approche (56) à une position d'insertion, et un dispositif de manoeuvre motorisé (78) agissant entre ledit dispositif d'insertion et le convoyeur (10) lorsque la station vide respective passe audit site d'insertion, afin de charger le conteneur correspondant (11) sur la station correspondante (12) du convoyeur.

14. Système de stockage à accès multiples suivant la revendication 12, dans lequel ledit dispositif d'insertion comprend un poussoir motorisé (58) pour déplacer les conteneurs (11) le long des moyens d'approche (56), une transmission (37) interconnectant ledit convoyeur (10) et ledit poussoir (58), et un embrayage (55) en association active avec ladite transmission (37) et ledit poussoir (58) de façon à actionner sélectivement le poussoir lorsqu'il y a une station vide à la partie adjacente dudit convoyeur.

15. Système de stockage à accès multiple suivant la revendication 1, dans lequel un desdits sites est un site d'extraction (15), pour extraire des conteneurs de transfert d'articles (11) du convoyeur, et l'autre desdits sites est un site d'insertion (16) pour l'insertion de conteneurs de transfert d'articles sur le convoyeur, un dispositif d'extraction comprenant un élément de déviation (21) situé audit site d'extraction et ayant un premier réglage (représenté en trait mixte) en dehors du passage desdits conteneurs et un deuxième réglage (représenté en trait continu) dans lequel l'élément de déviation (21) est en contact potentiel avec les conteneurs (11) pendant le déplacement des conteneurs sur un convoyeur, et dans lequel ledit élément de déviation (21) est capable, en réponse à la poursuite du mouvement du convoyeur, de dégager le conteneur respectif du convoyeur, un dispositif d'insertion situé au site d'insertion (16) comprenant des moyens d'approche (56) pour diriger des conteneurs à une position d'insertion par rapport à une station vide se trouvant au site d'insertion et pour amener les conteneurs à une position telle que lesdits éléments de fixation (17) des conteneurs viennent en prise avec les éléments de fixation complémentaires (18) du convoyeur à une station vide correspondante, et une structure d'interconnexion commune (37) entre le convoyeur, le dispositif d'extraction et le dispositif d'insertion de sorte que les vitesses de fonctionnement du dispositif d'extraction et du dispositif d'insertion répondent à la vitesse de fonctionnement du convoyeur pour toutes les variations de la vitesse de fonctionnement du convoyeur.

**Patentansprüche**

1. Mehrfachzugang-Speichersystem mit einem endlosen Förderer (10), der eine Mehrzahl von Stationen (12) und Guthalteglieder (11) zum Einnehmen von Speicherstellung an den Stationen (12) besitzt;

dadurch gekennzeichnet, daß
im Bereich des Förderers (10) mindestens zwei Übergabestellen (15, 16) für eine Übergabe der Halteglieder (11) zwischen Stellungen auf dem Föderer (10) und von dem Förderer (10) abgerückten Stellungen vorgesehen sind, daß für eine Bahn für die Bewegung der Stationen (12) zu den Übergabestellen und von ihnen weg vorgesehen ist, daß auf dem Förderer an den Stationen Kupplungselemente (18) des Förderers vorgesehen sind, daß an den Haltegliedern (11) Kupplungselemente (17) der Halteglieder vorgesehen sind; daß an den Übergabestellen eine Übergabeanordnung vorgesehen ist, die dazu dient, Halteglieder (11) zwischen Stellungen zu bewegen, in die Kupplungselemente (17, 18) ein- bzw. ausgerückt sind, während sich der endlose Förderer in Form einer endlosen Schleife längs der genannten Bewegungsbahn weiter an den Übergabestellen vorbeibewegt; und daß eine Bewegungen koordinierende Anordnung (37) vorgesehen ist, die Elemente besitzt, die im Betrieb sowohl an dem Förderer (10, 30) als auch an der Übergabeanordnung (16, 50) angreifen, so daß die Geschwindigkeit des Förderers und die Geschwindigkeit der Übergabeanordnung (16, 50) bei allen Veränderungen dieser Geschwindigkeit koordiniert werden.

2. Mehrfachzugang-Speichersystem nach Anspruch 1, dadurch gekennzeichnet, daß zwei Übergabestellen vorgesehen sind, von denen die eine eine Abnahmestelle (15) zur Abnahme von Haltegliedern von dem Förderer ist und die andere eine Aufgabestelle (16) zur Aufgabe von Haltegliedern auf den Förderer ist.

3. Mehrfachzugang-Speichersystem nach Anspruch 2, dadurch gekennzeichnet, daß die Bewegungen koordinierende Anordnung (37) Elemente besitzt, die im Betrieb an der Einfügungsstelle (16) sowohl an dem Förderer (38) als auch an der Übergabeanordnung angreifen.

4. Mehrfachzugang-Speichersystem nach Anspruch 1, dadurch gekennzeichnet, daß an der Übergabestelle (15) zwischen dem Förderer und der Übergabeanordnung eine auf die Bewegung des Förderers ansprechende Aktivieranordnung (19, 21) zum Verändern des Zustandes der Kupplungselemente (17, 18) vorgesehen ist.

5. Mehrfachzugang-Speichersystem nach Anspruch 1, dadurch gekennzeichnet, daß zwischen dem Förderer (10) und dem an der Übergabestelle (15) befindlichen Halteglied (11) ein Antrieb (19) vorgesehen ist, der bei einem Ausrücken der Kupplungselemente (17, 18) eine Bewegung der Halteglieder (11) von dem Förderer (10) weg bewirkt.

6. Mehrfachzugang-Speichersystem nach Anspruch 1, dadurch gekennzeichnet, daß eine der Übergabestellen eine Abnahmestelle ist und daß an der Abnahmestelle eine Abnahmeanordnung (15) vorgesehen ist, die ein Ablenkmittel (21) aufweist, das in einer ersten Einstellung von den Haltegliedern (11) abgerückt ist und in einer zweiten Einstellung zum Angriff an den Haltegliedern befähigt ist, während diese auf dem Förderer bewegt werden, wobei das Ablenkmittel (21) geeignet ist, auf Grund der fortgesetzten Bewegung des Förderer das entsprechende Halteglied (11) von dem Förderer abzurücken.

7. Mehrfachzugang-Speichersystem nach Anspruch 6, dadurch gekennzeichnet, daß das Ablenkmittel (21) eine wahlweise wirksame Antriebsanordnung (22) zum Verändern der Einstellung des Ablenkmittels zwischen der ersten und der zweiten Einstellung besitzt.

8. Mehrfachzugang-Speichersystem nach Anspruch 6, dadurch gekennzeichnet, daß zwischen dem Förderer und dem an der Abnahmestelle (15) befindlichen Halteglied (11) ein Antrieb (19) vorgesehen ist, der Halteglieder in eine Stellung im Abstand von dem Förderer bewegt.

9. Mehrfachzugang-Speichersystem nach Anspruch 6, dadurch gekennzeichnet, daß das Ablenkmittel (21) ein Kontaktstück besitzt, das eine erste untere Einstellage einnehmen kann, in der es in der Bewegungsbahn der Stationen (12) von den Haltegliedern (11) abgerückt ist, und eine höhere, zweite Lage, in der es im Betrieb an den Haltegliedern (11) im Hebesinne angreift und dabei die Kupplungselemente (17) der Halteglieder von den entsprechenden Kupplungselementen (18) des Förderers abhebt.

10. Mehrfachzugang-Speichersystem nach Anspruch 9, dadurch gekennzeichnet, daß auf dem Förderer eine kraftbetätigte Hebeeinrichtung (22) vorgesehen ist, die zum Verändern der Höhenlage des Haltegliedes (11) an dem Kontaktstück (21) angreift.

11. Mehrfachzugang-Speichersystem nach Anspruch 9, dadurch gekennzeichnet, daß auf dem Förderer (10) eine kraftbetätigte Hebeeinrichtung (22) vorgesehen ist, die durch fortschreitenden hebenden Angriff an dem Kontaktstück (21) das Halteglied (11) auf seiner vorlaufenden Seite früher hebt als auf der nachlaufenden Seite, so daß die Kupplungselemente (17, 18) auf der vorlaufenden Seite vor den Kupplungselementen (17, 18) auf der nachlaufenden Seite abgerückt werden.

12. Mehrfachzugang-Speichersystem nach Anspruch 1, dadurch gekennzeichnet, daß eine der Übergabestellen eine Aufgabestelle (16) ist und daß eine Aufgabeanordnung vorgesehen ist, die eine Zugangsstrecke (56, 57) zum Führen von Haltegliedern zu dem Förderer besitzt, sowie Plazierungselemente (77) zum Vorschieben der Halteglieder (11) in eine Aufgabestellung relativ zu einer an der Aufgabestelle vorhandenen, leeren Station und zum Bewegen der Halteglieder in eine Stellung, in der die Kupplungselemente (17) des Haltegliedes an den sich auf dem Förderer in der leeren Station befindlichen, komplementären Kupplungselementen (18) des Förderers angreifen.

13. Mehrfachzugang-Speichersystem nach Anspruch 12, dadurch gekennzeichnet, daß die Aufgabeanordnung zwei Reibelemente (57) auf einer Zugangs- und Führungskonstruktion (82) besitzt, die quer zu der Zugangsstrecke (56) in einer Aufgabeposition angeordnet ist, sowie einen motorischen Antrieb (78), der zwischen der Aufgabeanordnung und dem Förderer (10) wirksam ist, wenn die betreffende leere Station die Aufgabestelle durchwandert, so daß das entsprechende Halteglied (11) dann auf die entsprechende Station (12) des Förderers aufgegeben wird.

14. Mehrfachzugang-Speichersystem nach Anspruch 12, dadurch gekennzeichnet, daß die Aufgabeanordnung ein kraftbetätigtes Vortriebsglied (58) zum Bewegen der Halteelemente (11) längs der Zugangsstrecke (56) besitzt, ferner einen Antrieb (37), der den Förderer (10) und das Vortriebsglied (58) miteinander verbindet, und eine Trennkupplung (55), die mit dem Antrieb (37) und dem Vortriebsglied (58) derart in Wirkungsbeziehung steht, daß das Vortriebsglied wahlweise betätigt wird, wenn sich auf dem benachbarten Teil des Förderers eine leere Station befindet.

15. Mehrfachzugang-Speichersystem nach Anspruch 1, dadurch gekennzeichnet, daß eine der genannten Stellen eine Abnahmestelle (15) zur Abnahme von Gutübergabeelementen (11) von dem Förderer ist, und daß die andere der genannten Stellen eine Aufgabestelle (16) zur Aufgabe von Gutübergabeelementen auf den Förderer ist, daß an der Abnahmestelle eine Abnahmeanordnung vorgesehen ist, die ein Ablenkmittel (21) besitzt, das in einer (gestrichelt dargestellten) ersten Einstellung von den Haltegliedern abgerückt ist und in einer (ausgezogen dargestellten) zweiten Einstellung an den sich auf einem Förderer bewegenden Haltegliedern (11) angreifen kann, wobei das Ablenkmittel (21) geeignet ist, auf Grund einer fortgesetzten Bewegung des Förderers das entsprechende Halteglied von dem Förderer abzurücken, ferner eine an der Aufgabestelle (16) vorgesehene Aufgabeanordnung, die eine Zugangsstrecke (56) besitzt, die dazu dient, Haltegliedern relativ zu einer an der Aufgabestelle vorhandenen, leeren Station in eine Aufgabestellung zu führen und die Halteglieder in eine Stellung zu bewegen, in der die Kupplungselemente (17) der Halteglieder an in einer entsprechenden leeren Station befindlichen, komplementären Kupplungselementen (18) des Förderers angreifen, und eine gemeinsame Verbindungseinrichtung (37) zwischen dem Förderer, der Abnahmeanordnung und der Aufgabeanordnung, so daß die Geschwindigkeiten der Abnahmeanordnung und der Aufgabeanordnung auch bei einer Veränderung der Geschwindigkeit des Förderers von dessen Geschwindigkeit abhängig sind.

Fig. 1.

Fig. 3.

Fig. 2.

EP 0 272 340 B1

Fig. 4.

EP 0 272 340 B1

# Fig. 5.

**Fig. 6.**

**Fig. 7.**

**Fig. 8.**

**Fig. 9.**

Fig. 10.

Fig. 11.

**Fig. 12.**

Fig. 13.

EP 0 272 340 B1

19

Fig. 14.

Fig. 15.

EP 0 272 340 B1